# EUROPEAN PATENT APPLICATION

(11) **EP 4 765 651 A1**
(43) Date of publication of application: **24.06.2026**
(21) Application number: 25207965.2
(22) Date of filing: 10.10.2025
(51) Int. Cl.: H04B 1/00, H01Q 5/35, H04B 7/0413

(54) **MULTI-RADIO DEVICE WITH HIGH-ISOLATION DUAL-FEED ANTENNA**

(30) Priority: 18.12.2024 US 202418985095
(71) Applicant: INTEL Corporation, Santa Clara, CA 95054 (US)
(72) Inventor: AVRAHAM, Oren Ezra, 5405220 Givat Shmuel (IL); BENJAMIN, Ofer, Petach-Tikva (IL); RESHEF, Ehud, 3608249 Kiryat Tivon (IL); THAKUR, Jayprakash, 560035 Bangalore (IN); SUH, Seong-Youp John, Portland, 97229 (US); DEGANI, Ofir, 22801 Nes-Ammin (IL); EL HAJJ, Walid, 06600 Antibes (FR); YANG, Tae Young, Portland, 97229 (US)
(74) Representative: Viering, Jentschura & Partner mbB Patent- und Rechtsanwälte

(57) **Abstract**

A device has a first diplexer with a first port and a second port, configured to pass a first signal and a second signal, and a third port, configured to pass a first combined signal including the first signal and the second signal. The device has a second diplexer with a fourth port, configured to pass a third signal; a fifth port, configured to pass a fourth signal; and a sixth port, configured to pass a second combined signal including the third signal and the fourth signal. A dual-feed antenna has a first antenna interface, connected to the third port, and a second antenna interface, connected to the sixth port; and concurrently transmits or receives the first combined signal and the second combined signal. One of the first signal or the second signal, and one of the third signal or the fourth signal are in a common frequency band.

## Description

### Background

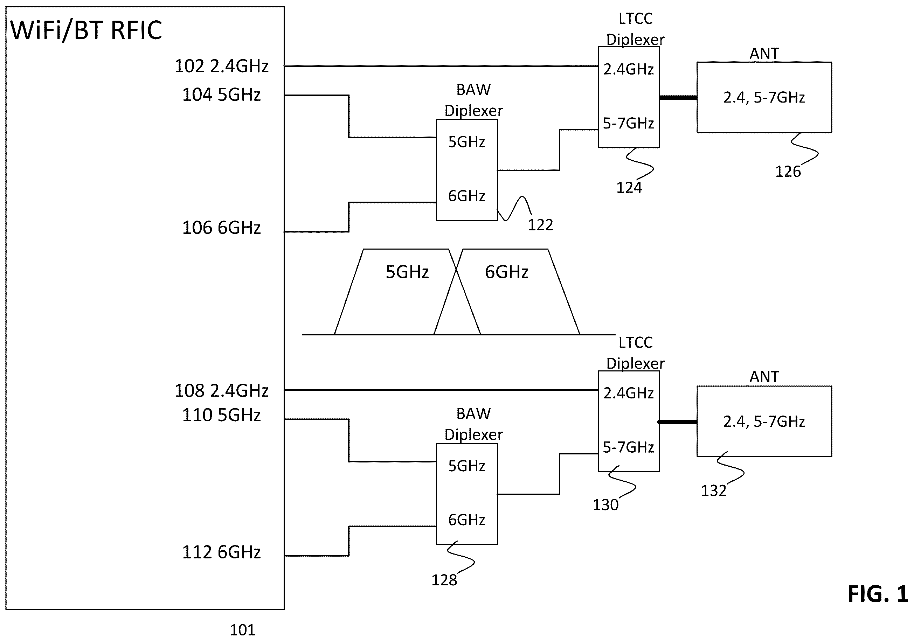

Wireless communication devices (e.g., devices that can send or receive using a radio) may operate concurrently in multiple bands, which themselves may overlap or be sufficiently adjacent to one another as to result in interference. Such devices may also concurrently operate using different radio communication protocols that utilize adjacent or overlapping bands and may thus be subject to interfering with one another. Although a variety of constellations exit, a given device may, for example, be configured to operate using Wi-Fi (Wireless Local Area Network using Institute of Electrical and Electronics Engineers (IEEE) protocol 802.11), Bluetooth (wireless communication protocol promulgated by the Bluetooth Special Interest Group), and a wireless wide area network (WWAN), wherein the Bluetooth radio may, for example, operate in a 2.4 gigahertz (GHz) band (note that other bands are also possible for Bluetooth, such as, for example, a 5 GHz band or a 6 GHz band) and the Wi-Fi radio operates in the 2.4 GHz band and/or another band (e.g., 5 GHz or 6 GHz), or the Wi-Fi radio operates concurrently in the 5 GHz band and the 6 GHz band, which overlap and are thus subject to interfering with one another unless additional measures are taken. This situation is depicted in FIG. 1, which, for demonstrative purposes, shows concurrent use of a 2.4 GHz band, a 5 GHz band and a 6 GHz band. In this figure, the underlying device, such as a radio frequency integrated circuit (RFIC) 101, includes a first chain 102 (e.g., a first set of radio elements for transmission or reception, which may include, but is not limited to, any of a low noise amplifier (LNA), a mixer, a filter, an analog-to-digital converter (ADC), or a digital-to-analog converter (DTC)) for a 2.4 GHz signal, a second radio chain 104 for a 5 GHz signal, and a third radio chain 106 for a 6 GHz signal. The second radio chain 104 and the third radio chain 106 may in some circumstances be distinct or in other circumstances may partially or completely overlap one another and thus require additional management to prevent interference when combined for use with the same antenna. A conventional solution is to diplex these signals with a bulk acoustic wave (BAW) diplexer 122, which uses one or more BAW filters to separate combined signals on different frequency bands. Because BAW filters exhibit a high roll-off and are well-suited for separation of combined signals in close proximities, such as a first signal in the 5 GHz band and a second signal in the 6 GHz band.

Although such BAW filters create a workable solution for the problems associated with concurrent transmission or reception of signals in the 5 GHz and 6 GHz bands, they are expensive and may undesirably increase the materials costs for a given device. Such reliance on BAW filters in this implementation also results in a dichotomous, inflexible split into non-overlapping bands (e.g. 5-7 GHz-> 5 GHz/6 GHz), high insertion loss, and a large form factor. Thus, it is desired to manage the concurrent use of radios with mutually interfering or mutually overlapping frequencies without the limitations of a BAW filter as described above.

### Brief Description of the Drawings

In the drawings, like reference characters generally refer to the same parts throughout the different views. The drawings are not necessarily to scale, emphasis instead generally being placed upon illustrating the exemplary principles described herein. In the following description, various exemplary embodiments are described with reference to the following drawings, in which:
FIG. 1 shows concurrent use of a 2.4 GHz band, a 5 GHz band and a 6 GHz band;
FIG. 2 depicts the high-isolation, dual-feed antenna being used to implement full band concurrency in a multiple-input multiple-output (MIMO) pair;
FIG. 3 depicts a dual-radio pair configured with the high-isolation, dual-feed antenna;
FIG. 4 depicts an alternative configuration of FIG. 3, in which chains A and B of the respective MIMO signals are passed through different antennas; and
FIG. 5 depicts a device.

### Description

The following detailed description refers to the accompanying drawings that show, by way of illustration, exemplary details and embodiments in which aspects described herein may be practiced.

The word "exemplary" is used herein to mean "serving as an example, instance, or illustration". Any embodiment or design described herein as "exemplary" is not necessarily to be construed as preferred or advantageous over other embodiments or designs.

Throughout the drawings, it should be noted that like reference numbers are used to depict the same or similar elements, features, and structures, unless otherwise noted.

The phrase "at least one" and "one or more" may be understood to include a numerical quantity greater than or equal to one (e.g., one, two, three, four, [...], etc.). The phrase "at least one of" with regard to a group of elements may be used herein to mean at least one element from the group consisting of the elements. For example, the phrase "at least one of" with regard to a group of elements may be used herein to mean a selection of: one of the listed elements, a plurality of one of the listed elements, a plurality of individual listed elements, or a plurality of a multiple of individual listed elements.

The words "plural" and "multiple" in the description and in the claims expressly refer to a quantity greater than one. Accordingly, any phrases explicitly invoking the aforementioned words (e.g., "plural [elements]", "multiple [elements]") referring to a quantity of elements expressly refers to more than one of the said elements. For instance, the phrase "a plurality" may be understood to include a numerical quantity greater than or equal to two (e.g., two, three, four, five, [...], etc.).

The phrases "group (of)", "set (of)", "collection (of)", "series (of)", "sequence (of)", "grouping (of)", etc., in the description and in the claims, if any, refer to a quantity equal to or greater than one, i.e., one or more. The terms "proper subset", "reduced subset", and "lesser subset" refer to a subset of a set that is not equal to the set, illustratively, referring to a subset of a set that contains less elements than the set.

The term "data" as used herein may be understood to include information in any suitable analog or digital form, e.g., provided as a file, a portion of a file, a set of files, a signal or stream, a portion of a signal or stream, a set of signals or streams, and the like. Further, the term "data" may also be used to mean a reference to information, e.g., in form of a pointer. The term "data", however, is not limited to the aforementioned examples and may take various forms and represent any information as understood in the art.

The terms "processor" or "controller" as, for example, used herein may be understood as any kind of technological entity that allows handling of data. The data may be handled according to one or more specific functions executed by the processor or controller. Further, a processor or controller as used herein may be understood as any kind of circuit, e.g., any kind of analog or digital circuit. A processor or a controller may thus be or include an analog circuit, digital circuit, mixed-signal circuit, logic circuit, processor, microprocessor, Central Processing Unit (CPU), Graphics Processing Unit (GPU), Neural Processing Unit (NPU), Digital Signal Processor (DSP), Field Programmable Gate Array (FPGA), integrated circuit, Application Specific Integrated Circuit (ASIC), etc., or any combination thereof. Any other kind of implementation of the respective functions, which will be described below in further detail, may also be understood as a processor, controller, or logic circuit. It is understood that any two (or more) of the processors, controllers, or logic circuits detailed herein may be realized as a single entity with equivalent functionality or the like, and conversely that any single processor, controller, or logic circuit detailed herein may be realized as two (or more) separate entities with equivalent functionality or the like.

As used herein, "memory" is understood as a computer-readable medium (e.g., a non-transitory computer-readable medium) in which data or information can be stored for retrieval. References to "memory" included herein may thus be understood as referring to volatile or non-volatile memory, including random access memory (RAM), read-only memory (ROM), flash memory, solid-state storage, magnetic tape, hard disk drive, optical drive, 3D XPointTM, among others, or any combination thereof. Registers, shift registers, processor registers, data buffers, among others, are also embraced herein by the term memory. The term "software" refers to any type of executable instruction, including firmware.

Unless explicitly specified, the term "transmit" encompasses both direct (point-to-point, broadcast/multicast to multipoint, etc.) and indirect transmission (via one or more intermediary points). Similarly, the term "receive" encompasses both direct and indirect reception. Furthermore, the terms "transmit," "receive," "communicate," and other similar terms encompass both physical transmission (e.g., the transmission of radio signals) and logical transmission (e.g., the transmission of digital data over a logical software-level connection). For example, a processor or controller may transmit or receive data over a software-level connection with another processor or controller in the form of radio signals, where the physical transmission and reception is handled by radio-layer components such as radiofrequency (RF) transceivers and antennas, and the logical transmission and reception over the software-level connection is performed by the processors or controllers. The term "communicate" encompasses one or both of transmitting and receiving, i.e., unidirectional or bidirectional communication in one or both of the incoming and outgoing directions. The term "calculate" encompasses both 'direct' calculations via a mathematical expression/formula/relationship and 'indirect' calculations via lookup or hash tables and other array indexing or searching operations.

The word "chain" is used herein throughout to describe a sequence of interconnected components that form a single path for transmission or reception. In the context of reception, the chain (e.g., the Rx chain) may include an antenna, a low noise amplifier (LNA), a mixer, a filter, and an analog-to-digital converter (ADC). In the context of transmission, the chain (e.g., the Tx chain) may include a digital-to-analog converter (DAC), a mixer, a power amplifier, and an antenna. Because a dual feed antenna is used throughout the description, and notwithstanding the foregoing definition of chains, two or more chains may share an antenna in the configurations described herein.

The terms 5 GHz band and 6 GHz band are used herein throughout. These generalizations (e.g., as opposed to the specific frequencies) are used herein because the principles and methods disclosed herein can be generally applied to a variety of frequency ranges (such as within a 5 GHz band, within a 6 GHz band, or even outside of these bands). In modern, wireless communication, however, certain conflicts (e.g., certain interference) are commonly an issue in the 5 GHz and 6 GHz range. Although it is maintained that the boundaries of a 5 GHz band and a 6 GHz band should be understood broadly and with flexibility, one recognized range for these bands is for the 5 GHz band to extend from 5170 MHz to 5895 MHz (in some situations from 5170 MHz to 5835 MHz), and for the 6 GHz band to extend from 5945 MHz to 7125 MHz. In other situations, it is also known for the 5 GHz band to extend from 5170 MHz to 5330 MHz and for the 6 GHz band to extend from 5490 MHz to 7125 MHz. Other delineations between the 5 GHz band and the 6 GHz band are conceivable.

The principles and methods disclosed herein describe a device implementation that relies on a high-isolation (HI), dual-feed (DF) antenna. Although various configurations of a high-isolation, dual-feed antenna are conceivable, a high-isolation, dual-feed antenna that is suitable for the purposes described herein was disclosed in United States Application 18/956,041, filed on November 22, 2024, the entire contents of which are incorporated herein by reference. The device and method disclosed herein, permit the use of the high-isolation, dual-feed antenna to transmit or receive a first 5-7 GHz band along a first feed and a second 5-7 GHz band from along a second feed while maintaining high isolation (e.g., > 20 dB, >40 dB) between the feeds. That is, the devices and methods disclosed herein permit full 5-7GHz + Full 5-7GHz radio concurrency; flexibility of band/radio selection/routing; low cost as compared to a conventional use of a BAW diplexer for signal separation; no insertion loss penalty as compared to the conventional use of a BAW diplexer for signal separation; and no form factor impact on the printed circuit board (PCB); and suitability for WWAN / Wireless Local Area Network PC platforms; while simplifying Angle of Arrival (AoA) support resulting from the controlled phase center distance between the two antenna elements (λ/4<d<λ/2).

The conventional way to determine angle of arrival, is to calculate the arrival phase offset between two signals (that accumulates due to the link distance). Assuming that the accumulated phase difference is < pi is helpful. If the distance between the effective focal points of the two antenna elements is too small or too great (i.e. outside the mentioned range) the phase offset due to the over-the-air is either too small to be useful, or too large (> pi) so as to add ambiguity. Thus, the compact nature of the device with the high isolation, dual feed antennas disclosed herein permits a smaller phase difference that simplifies angle of arrival calculation. By employing the HI, DF antenna, which can provide greater than 40 dB isolation at 5-7GHz between its two antenna elements, full flexibility can be achieved both in band selection and radio selection (Wi-Fi/Bluetooth).

Returning to FIG. 1, FIG. 1 depicts a conventional configuration for the concurrent management of 2.4 GHz, 5 GHz, and 6 GHz feeds in a single antenna. In this figure, the RFIC 101 (or other radiofrequency device or configuration), includes a first 2.4 GHz chain 102, a first 5 GHz chain 104, a first 6 GHz chain 106; a second 2.4 GHz chain 108, a second 5 GHz chain 110, and a second 6 GHz chain 112. The first 5 GHz chain 104 and the first 6 GHz chain 106 are connected to a first port and a second port (e.g., to two same-sided ports, to two input ports, to two output ports, etc.) of a BAW diplexer 122, and a third port (e.g., a port opposite the two ports above) of the BAW diplexer 122 is connected to one of two ports (e.g., to one of two input ports, to one of two output ports, to one of two same-sided ports, etc.) of a standard diplexer (e.g., a low-temperature co-fired ceramic LTCC diplexer) 124. The 2.4 GHz chain 102 is connected to the other one of the two ports of the LTCC diplexer 124. The opposite port of the LTCC diplexer 124 (e.g., the single port opposite the two ports) is connected to first antenna 126.

For completeness, and in a parallel configuration, the second 5 GHz chain 110 and the second 6 GHz chain 112 are connected to two same-sided ports of BAW diplexer 128 (a second BAW diplexer), which on the opposite side is connected to one of two same-sided ports of a second LTCC diplexer 130. The second 2.4 GHz chain 108 is connected to the other of the two same-sided ports of the second LTCC diplexer 130. The port on the opposite side of the second LTCC diplexer 130 is connected to the second antenna 132. In this manner, the first antenna 126 can transmit a signal comprising the combined first 2.4 GHz chain 102, first 5 GHz chain 104, and first 6 GHz chain 106, and the second antenna 132 can transmit a signal comprising the combined second 2.4 GHz chain 108, second 5 GHz chain 110, and second 6 GHz chain 112. Conversely, the first antenna 126 can receive wireless signals corresponding to any or any combination of the first 2.4 GHz chain 102, the first 5 GHz chain 104, or the first 6 GHz chain 106, and these (combined) signals may be passed through LTCC diplexer 124 and BAW diplexer 122 to the RFIC 101. In a similar manner, the second antenna 132 can receive wireless signals corresponding to any or any combination of the second 2.4 GHz chain 108, the second 5 GHz chain 110, or the second 6 GHz chain 112, and these (combined) signals may be passed through BAW diplexer 128 and the second LTCC diplexer 130 to the RFIC 101.

Of note relative to FIG. 1 is that BAW diplexer 122 and BAW diplexer 128 are bulk acoustic wave diplexers. These diplexers operate by converting electrical energy into acoustic or mechanical energy on a piezoelectric material. Such diplexers may include interdigital transducers that may convert electrical energy to mechanical acoustic waves that travel through the surface of the piezoelectric material. Such diplexers can be implemented to perform a bandpass filtering function, which may be useful to separate a combined, received signal, such as signals received at first antenna 126 or second antenna 132, and to deliver the separated signals to the respective portions of the RFIC 101. The skilled person will appreciate that each of the BAW diplexer 122 and the LTCC diplexer 124 include one or more filters, which enable the separation of signals in different frequency ranges or bands. Of note, BAW diplexers exhibit a sharper roll-off than LTCC diplexers, and therefore the BAW diplexer 122 may be superior to the LTCC diplexer 124 for separation of frequency ranges or bands that are close to one another.

Even with the filtering capabilities of BAW diplexer 122 and BAW diplexer 128, the full spectra of the 5 GHz band and the 6 GHz band are not conventionally available. That is, since the 5 GHz band and the 6 GHz band overlap, channels are conventionally selected within these bands such that channels in the overlapping region are used either in the 5 GHz band or in the 6 GHz band or are avoided altogether. In this manner, the conventional configuration requires the use of a BAW diplexer, which includes certain trade-offs as described above (e.g., cost, insertion loss, form factor, etc.), and still precludes full use of the spectra in the 5 GHz and 6 GHz bands.

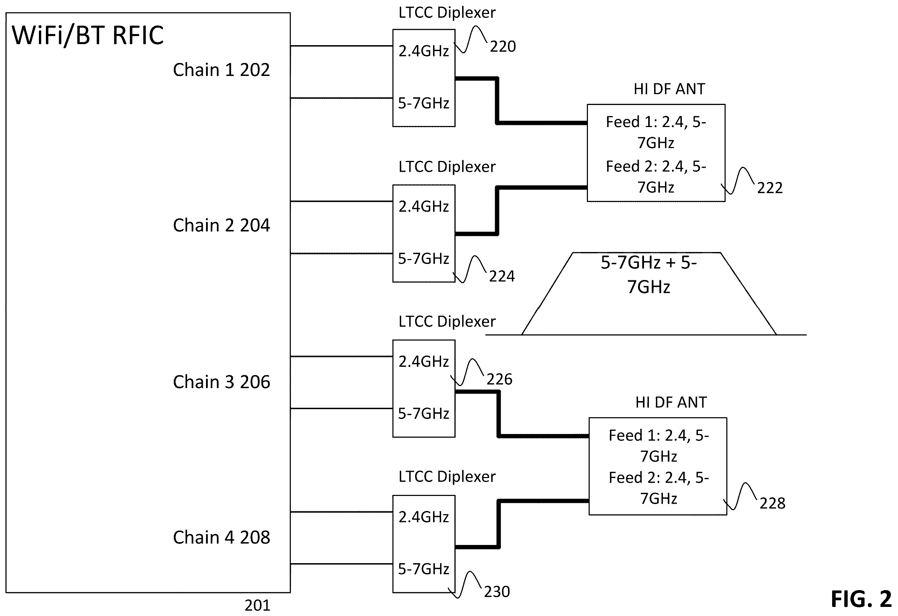

FIG. 2 depicts an implementation in which the high-isolation, dual-feed antenna is used to implement full band concurrency in a MIMO pair. In this manner, the RFIC 201 includes four first chains: chain 1 202, chain 2 204, chain 3 206, and chain 4 208. In one non-limiting example, chain 1 202 can send and/or receive a first 2.4 GHz signal and a first 5-7 GHz signal (the 5-7 GHz signal may refer to a signal in the 5 GHz band or a signal in the 6 GHz band), which are diplexed in first diplexer 220, and chain 2 204 can send and/or receive a second 2.4 GHz signal and a second 5-7 GHz signal, which are diplexed in a second diplexer 224. For transmissions, each of the first diplexer 220 and the second diplexer 224 output a combined signal, such that the first diplexer 220 outputs a first combined signal that includes the first 2.4 GHz signal and the first 5-7 GHz signal of the first chain, and the second diplexer 224 outputs a second combined signal that includes the second 2.4 GHz signal and the second 5-7 GHz signal of the second chain. It is expressly noted that having a 2.4 GHz signal on all feeds is optional. It is alternatively possible to have a 2.4 GHz signal on fewer than all feeds, such as only on chains 202 and 206.

Similarly, chain 3 206 can send and/or receive a third 2.4 GHz signal and a third 5-7 GHz signal, which are diplexed in third diplexer 226, and chain 4 208 can send and/or receive a fourth 2.4 GHz signal and a fourth 5-7 GHz signal, which are diplexed in a fourth diplexer 230. For transmissions, each of the third diplexer 226 and the fourth diplexer 230 output a combined signal, such that the third diplexer 226 outputs a third combined signal that includes the third 2.4 GHz signal and the third 5-7 GHz signal of the third chain, and the fourth diplexer 230 outputs a fourth combined signal that includes the fourth 2.4 GHz signal and the fourth 5-7 GHz signal of the fourth chain.

For reception, the process is reversed, such that a first combined signal comprising a 2.4 GHz signal and a 5-7 GHz signal may be received in feed 1 of dual-feed antenna 222 and be separated in the first diplexer 220, wherein a first 2.4 GHz signal is sent to chain 1 202, and a first 5-7 GHz signal is sent to chain 1 202. The combined signal of the second feed of dual-feed antenna 222 may be separated in the second diplexer 224 and sent to chain 2; a first feed of dual-feed antenna 228 may be separated in the third diplexer 226 and sent to chain 3; and a second feed of dual-feed antenna 228 may be separated in the fourth diplexer 230 and sent to chain 4 208.

In this manner, a MIMO pair may be realized using the high-isolation, dual-feed antenna 222 and dual-feed antenna 228. Of course, this is merely one implementation of a MIMO pair. The skilled person will appreciate that other configurations are possible. For example, Table 1, below, includes a detailed, albeit non-exhaustive, list of configurations for use with the diplexer and high-isolation dual-feed antenna disclosed herein. Of note, each of the configurations in FIG. 2 and Table 1, option 2 are performed with LTCC diplexers, and without any BAW diplexers, thereby eliminating the expense, the large form factor, and the insertion loss of a BAW diplexer. This is possible at least because a single diplexer does not need to separate a combined signal from the 5 GHz band and the 6 GHz band. Instead, each diplexer (the first diplexer 220, second diplexer 224, third diplexer 226, and fourth diplexer 230) separates a combined signal that comprises a signal from either the 5 GHz band or the 6 GHz band, and a signal from the 2.4 GHz band.

The device of FIG. 2 allows for a variety of configurations including, but not limited to, 2x2 Wi-Fi MIMO at Frequency F1 plus 2x2 Wi-Fi MIMO at Frequency F2; 2x2 Wi-Fi MIMO at Frequency F1 plus 1x1 Wi-Fi single-input single-output (SISO) at Frequency F2 plus Bluetooth at Frequency F3; or 2x2 Wi-Fi MIMO at Frequency F1 plus Bluetooth at Frequency F2 plus Bluetooth at Frequency F3 which can be either Frequency F1 or Frequency F2.

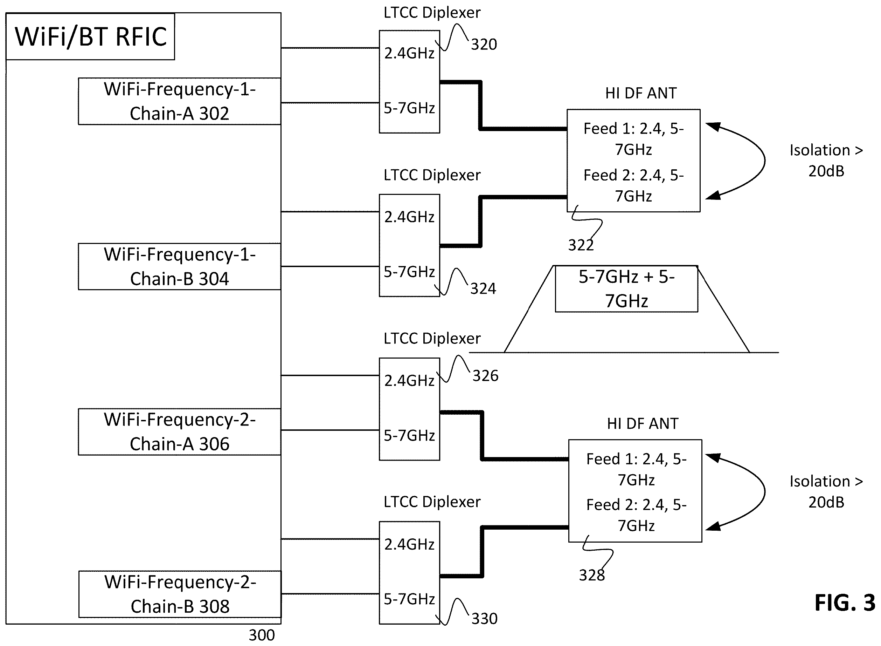

FIG. 3 depicts a dual-radio pair configured with the high-isolation, dual-feed antenna disclosed herein. In this configuration, the RFIC 300 may include various 2.4 GHz signals (e.g., such as Bluetooth signals) and/or Wi-Fi signals in the 5 GHz and 6 GHz bands such that two 2x2 MIMO communication chains are established. In this example, the RFIC 300 passes chain A of a first Wi-Fi frequency 302, chain B of the first Wi-Fi frequency 304 (e.g., chain A and chain B of the same frequency representing a 2x2 MIMO configuration), chain A of a second Wi-Fi frequency 306, and chain B of the second Wi-Fi frequency 308. A 2.4 GHz signal and chain A of the first Wi-Fi frequency 302 may be combined or separated in an LTCC diplexer 320 (first diplexer) (e.g., for transmissions, the 2.4 GHz signal and Wi-Fi frequency 1 will be combined in the LTCC diplexer 320, whereas for receive signals, a combined signal including both the 2.4 GHz signal and the Wi-Fi signal will be separated in the LTCC diplexer 320); chain B of the first Wi-Fi frequency 304 may be combined or separated in a second diplexer 324; chain A of the second Wi-Fi frequency 306 may be combined or separated in a third diplexer 326; and chain B of the second Wi-Fi frequency 308 may be combined or separated in a fourth diplexer 330. A combined signal is passed between a diplexer and a corresponding antenna port, such that a first combined signal is passed between the LTCC diplexer 320 (e.g. first diplexer) and feed 1 of the first antenna 322; a second combined signal is passed between the second diplexer 324 and feed 2 of the first antenna 322; a third combined signal is passed between the third diplexer 326 and feed 1 of the second antenna 328; and a fourth combined signal is passed between the fourth diplexer 330 and feed 2 of the second antenna 328.

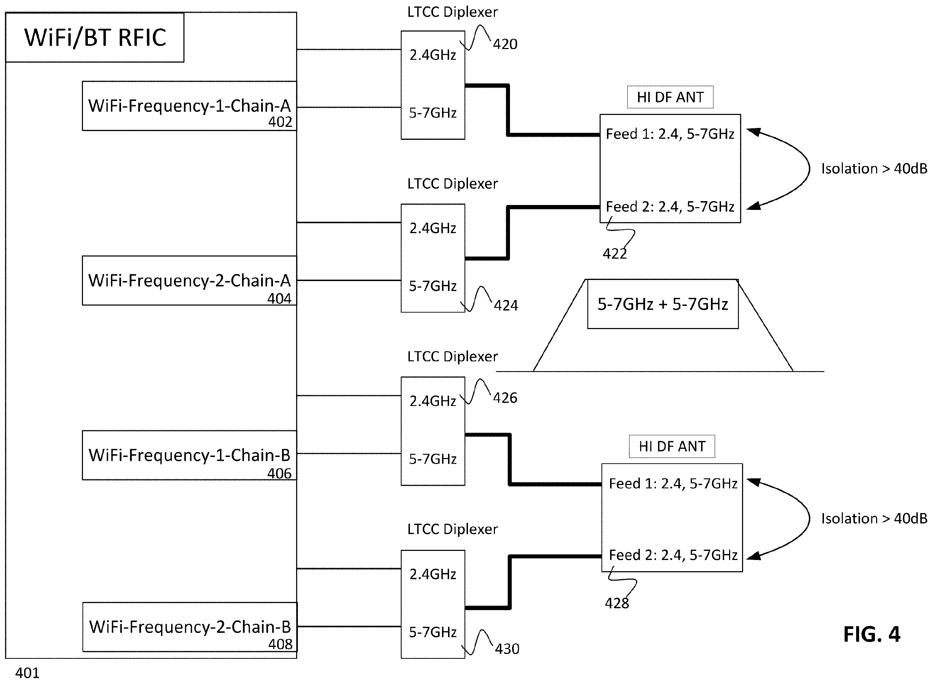

FIG. 4 depicts an alternative configuration of FIG. 3, in which chains A and B of the respective MIMO signals are passed through different antennas (e.g., through different dual-feed antennas). In this manner, the RFIC 401 passes Wi-Fi frequency 1, chain A 402; Wi-Fi frequency 2, chain A 404; Wi-Fi frequency 1, chain B 406; and Wi-Fi frequency 2, chain B 408. Wi-Fi frequency 1, chain A 402 and a 2.4 GHz signal (e.g. a Bluetooth signal) are combined or separated (e.g., depending on whether transmission or reception is occurring) in the first diplexer 420; Wi-Fi frequency 2, chain A 404 and a 2.4 GHz signal (e.g. a Bluetooth signal) are combined or separated in the second diplexer 424; Wi-Fi frequency 1, chain B 406 and a 2.4 GHz signal (e.g. a Bluetooth signal) are combined or separated in the third diplexer 426; and Wi-Fi frequency 2, chain B 408 and a 2.4 GHz signal (e.g. a Bluetooth signal) are combined or separated in the fourth diplexer 430. A first combined signal is passed between the first diplexer 420 and feed 1 of the first antenna 422; a second combined signal is passed between the second diplexer 424 and feed 2 of the first antenna 422; a third combined signal is passed between the third diplexer 426 and feed 1 of the second antenna 428; and fourth combined signal is passed between the fourth diplexer 430 and feed 2 of the second antenna 428.

FIGs. 2-4 are provided for demonstrative purposes to depict an array of possible configurations that may be desirable for use with the high-isolation, dual-feed antenna as described herein; however, these do not depict an exhaustive list of the possible configurations. At least the following potential configurations for the dual-feed antenna are contemplated:

| | **Antenna 1 feed 1** | **Antenna 1 feed 2** | **Antenna 2 feed 1** | **Antenna 2 feed 2** |
|---|---|---|---|---|
| **option 1** | S1_MIMO_A | S2_MIMO_A | S1_MIMO_B | S2_MIMO_B |
| **option 2** | S1_MIMO_A | S1_MIMO_B | S2_MIMO_A | S2_MIMO_B |
| **option 3** | S1_SISO | S2_MIMO_A | BT | S2_MIMO_B |
| **option 4** | S1_MIMO_A | BT_A | S1_MIMO_B | BT_B |
| **option 5** | S1_SISO | S2_SISO | BT_A | BT_B |
| **option 6** | S1_MIMO_A | S1_MIMO_A | BT_A | BT_B |

wherein S1_MIMO_A: MIMO is stream A of Signal S1 (on frequency F1);
S1_MIMO_B: MIMO is stream B of Signal S1 (on frequency F1); S2_MIMO_A: MIMO is stream A of Signal S2 (on frequency F2); S2_MIMO_B: MIMO is stream B of Signal S2 (on frequency F2); S1_SISO is single SISO stream of Signal S1 (on frequency F1);
BT is Bluetooth (different set of channels, per BT hopping pattern); BT_A: is Bluetooth (using 2 RF chains for Rx or Tx), Chain A; BT_B is Bluetooth (using 2 RF chains for Rx or Tx), Chain B; and "S" signals are any wireless signals including, but not limited to, Wi-Fi / 802.11 signals. The above examples are provided without respect to the order of feeds within a particular antenna. That is, option 1 could be written as
S1_MIMO_A S2_MIMO_A S1_MIMO_B S2_MIMO_B
or alternatively as
S2_MIMO_A S1_MIMO_A S2_MIMO_B S1_MIMO_B
such that the elements in the first two cells (e.g., corresponding to the dual feeds of the first antenna) are reversed, and/or that the elements in the second two cells (e.g., corresponding to the dual feeds of the second antenna) are reversed. Such reversal could be applied with any or all of the above options, and these reversals should be understood to be part of that which is described herein.

It is expressly noted that it would also be possible to incorporate two Bluetooth radios (Bluetooth 1 and 2) into the above options, such as if the device supports two independent Bluetooth operations. A non-limiting example of the frequency bands for F1, F2 could be or include 2.4 GHz, 5 GHz, 6 GHz, or any frequencies in the range of 5-7 GHz. Of course, the principles and methods disclosed herein remain largely frequency independent, and therefore, should Wi-Fi (or any other wireless protocol using the techniques described herein) expand beyond 6 GHz, they may be used with the dual-feed antenna according to the principles described herein. Bluetooth operation could be within a range of 2.4 GHz to 6.4 GHz. This upper limit of 6 GHz for Bluetooth is a practical limit owing merely to the fact that Bluetooth is not currently targeting operation above 6.4 GHz; however, should Bluetooth in fact introduce signals for frequencies above 6.4 GHz, the above operational range for Bluetooth signals in the dual-feed antenna as described herein could be amended to include these frequencies.

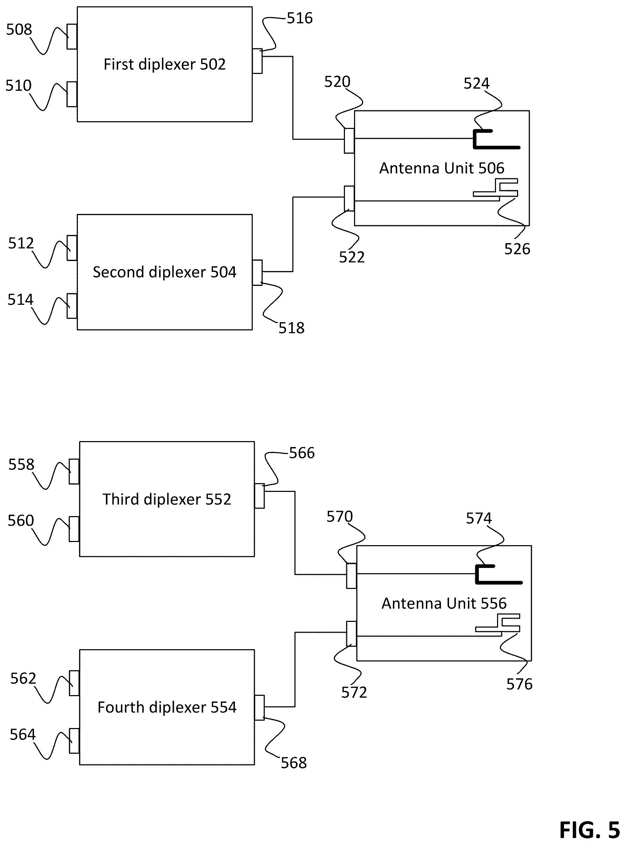

FIG. 5 depicts a device comprising a first diplexer 502. The first diplexer 502 includes a first port 508, configured to pass a first signal; a second port 510, configured to pass a second signal; and a third port 516, configured to pass a first combined signal comprising the first signal and the second signal. The device includes a second diplexer 504. The second diplexer 504 includes a fourth port 512, configured to pass a third signal; a fifth port 514, configured to pass a fourth signal; and a sixth port 518, configured to pass a second combined signal comprising the third signal and the fourth signal. The device further includes a dual-feed antenna 506. The dual-feed antenna includes a first antenna interface 520, connected to the third port 516; and a second antenna interface 522, connected to the sixth port 518. The dual-feed antenna 506 is configured to concurrently transmit or concurrently receive the first combined signal and the second combined signal. In this manner, one of the first signal or the second signal, and one of the third signal or the fourth signal are in a common frequency band. The dual-feed antenna 506 includes a monopole antenna 524 and a slot antenna 526. The monopole antenna 524 may include at least two extensions for transmission or reception of two different frequency ranges. The slot antenna 526 may include at least two slot regions for transmission or reception of two different frequency ranges.

The device of FIG. 5 may be optionally doubled to include a third diplexer 552 including a seventh port 558, configured to pass a fifth signal; an eighth port 560, configured to pass a sixth signal; and a ninth port 566, configured to pass a third combined signal comprising the fifth signal and the sixth signal. The device may include a fourth diplexer 554, including a tenth port 562, configured to pass a seventh signal; an eleventh port 564, configured to pass an eighth signal; and a twelfth port 568, configured to pass a forth combined signal comprising the seventh signal and the eighth signal. The device may further include a second dual-feed antenna 556. The second dual-feed antenna may include a third antenna interface 570, connected to the ninth port 566; and a fourth antenna interface 572, connected to the twelfth port 568. The second dual-feed antenna 556 may be configured to concurrently transmit or concurrently receive the third combined signal and fourth combined signal. The second dual-feed antenna 556 may include a monopole antenna 574 and a slot antenna 576. The monopole antenna 574 may include at least two extensions for transmission or reception of two different frequency ranges. The slot antenna 576 may include at least two slot regions for transmission or reception of two different frequency ranges.

The device may be configured to operate such that a frequency range of the third signal overlaps a frequency range of the first signal or wherein a frequency range of the fourth signal overlaps a frequency range of the second signal. In this manner, the dual-feed antenna 506 may include a first feed, which is configured to pass the first signal and the second signal; and a second feed, which is configured to pass the third signal and the fourth signal. The dual-feed antenna 506 may be configured to provide at least 20 dB of isolation, and in some configurations 40 dB of isolation, between any of the first signal and the second signal, and any of the third signal or the fourth signal.

The device, and in particular the isolation between the two antenna feeds, may allow for the eschewing of a BAW filter as depicted in FIG. 1. Instead, the device may be configured such that the first diplexer and the second diplexer are low temperature co-fired ceramics (LTCC) diplexers. The principles disclosed herein should, however, not be limited to the use of LTCC diplexers. Instead, any other diplexer exhibiting capable of separating the signals as disclosed herein that exhibits less insertion loss, a smaller form factor, or reduced cost comparted to a BAW filter may be used.

In some configurations, the first signal may optionally be a signal according to a Bluetooth communication protocol, which may be transmitted within the 2.4 GHz band, although transmission according to a Bluetooth protocol in one or more other bands is also possible. The second signal may optionally be a signal according to an Institute of Electrical and Electronics Engineers (IEEE) 802.11 protocol (e.g., a Wi-Fi signal). In this manner, the second signal may optionally be within a frequency range of 5 GHz to 7 GHz. The third signal may optionally be a signal according to an IEEE 802.11 protocol, which may further optionally be a signal within a 2.4 GHz band. The fourth signal may optionally be a signal according to an IEEE 802.11 protocol, which may optionally be a signal within a frequency range of 5 GHz to 7 GHz.

In an alternative configuration, each of the first signal, the second signal, the third signal, and the fourth signal may be signals according to an IEEE 802.11 protocol. The first signal and the third signal may optionally be within a same frequency band. In this manner, the device may be configured to transmit or receive the first signal and the second signal concurrently as a multiple-input-multiple-output (MIMO) signal. In a further optional configuration, the second signal and the fourth signal may be within a same frequency band, and the device may be configured to transmit or receive the third signal and the fourth signal concurrently as a multiple-input-multiple-output (MIMO) signal. In this manner, the first signal and the second signal may be within a same frequency band, and the device may be configured to transmit or receive the first signal and the second signal concurrently as a multiple-input-multiple-output (MIMO) signal. In an alternative configuration, the third signal and the fourth signal may be within a same frequency band, and the device may be configured to transmit or receive the third signal and the fourth signal concurrently as a multiple-input-multiple-output (MIMO) signal.

Alternatively, each of the first signal, the second signal, and the fourth signal may be signals according to an IEEE 802.11 protocol, and the third signal may be a signal according to a Bluetooth communication protocol. In this manner, the second signal and the fourth signal may be within a same frequency band, and the device may be configured to transmit or receive the second signal and the fourth signal concurrently as a MIMO signal.

In an alternative configuration, each of the first signal and the third signal may be signals according to an IEEE 802.11 protocol, and each of the second signal and the fourth signal may be signals according to a Bluetooth communication protocol. In this manner, the first signal and the third signal may be within a same frequency band, and the device may be configured to transmit or receive the first signal and the third signal concurrently as a MIMO signal.

In an alternative configuration, each of the first signal and the second signal may be signals according to an IEEE 802.11 protocol, and each of the third signal and the fourth signal may be signals according to a Bluetooth communication protocol. In this manner, the first signal and the second signal may be within a same frequency band, and the device may be configured to transmit or receive the first signal and the second signal concurrently as a multiple-input-multiple-output (MIMO) signal.

Of note, the high isolation of the antenna's dual feeds may permit the first signal and the second signal to be diplexed and fed into the dual-feed antenna without a switch to prevent concurrent transmission of the first signal and the second signal from the dual-feed antenna and without a BAW diplexer, which might otherwise be necessary due to its filtering capabilities. Instead, the antenna's isolation permits the first signal and the second signal to be diplexed with an LTCC diplexer or other simple diplexer.

Similarly, the third signal and the fourth signal may be diplexed and fed into the dual-feed antenna without a switch to prevent concurrent transmission of the third signal and the fourth signal from the dual-feed antenna and without a BAW diplexer, which might otherwise be necessary due to its filtering capabilities. Instead, the antenna's isolation permits the third signal and the fourth signal to be diplexed with an LTCC diplexer or other simple diplexer.

Further aspects will be shown by way of example:

In Example 1, a device, including: a first diplexer, including: a first port, configured to pass a first signal; a second port, configured to pass a second signal; and a third port, configured to pass a first combined signal including the first signal and the second signal; a second diplexer, including: a fourth port, configured to pass a third signal; a fifth port, configured to pass a fourth signal; and a sixth port, configured to pass a second combined signal including the third signal and the fourth signal; a dual-feed antenna, including a first antenna interface, connected to the third port; and a second antenna interface, connected to the sixth port; and wherein the dual-feed antenna is configured to concurrently transmit or concurrently receive the first combined signal and the second combined signal, and wherein one of the first signal or the second signal, and one of the third signal or the fourth signal are in a common frequency band.

In Example 2, the device of Example 1, wherein a frequency range of one of the first signal or the second signal overlaps with a frequency range of one of the third signal or the fourth signal.

In Example 3, the device of Example 1 or 2, wherein the dual-feed antenna includes a first feed, configured to pass the first signal and the second signal; and a second feed, configured to pass the third signal and the fourth signal; and wherein the antenna is configured to provide at least 20 dB of isolation between any of the first signal or the second signal, and any of the third signal or the fourth signal.

In Example 4, the device of any one of Examples 1 to 3, wherein the first diplexer is a low temperature co-fired ceramics (LTCC) diplexer.

In Example 5, the device of any one of Examples 1 to 4, wherein the second diplexer is a low temperature co-fired ceramics (LTCC) diplexer.

In Example 6, the device of any one of Examples 1 to 5, wherein neither the first diplexer nor the second diplexer is a bulk acoustic wave (BAW) diplexer.

In Example 7, the device of any one of Examples 1 to 6, wherein the first signal is a signal according to a Bluetooth communication protocol.

In Example 8, the device of Example 7, wherein the first signal is within a 2.4 GHz band.

In Example 9, the device of any one of Examples 1 to 8, wherein the second signal is a signal according to an Institute of Electrical and Electronics Engineers (IEEE) 802.11 protocol.

In Example 10, the device of Example 9, wherein the second signal is within a frequency range of 5 GHz to 7 GHz.

In Example 11, the device of any one of Examples 1 to 10, wherein the third signal is a signal according to an Institute of Electrical and Electronics Engineers (IEEE) 802.11 protocol.

In Example 12, the device of Example 11, wherein the third signal is within a 2.4 GHz band.

In Example 13, the device of any one of Examples 1 to 12, wherein the fourth signal is a signal according to an Institute of Electrical and Electronics Engineers (IEEE) 802.11 protocol.

In Example 14, the device of Example 13, wherein the fourth signal is within a frequency range of 5 GHz to 7 GHz.

In Example 15, the device of any one of Examples 2 to 14, wherein the first signal and the second signal are diplexed and fed into the dual-feed antenna without a switch to prevent concurrent transmission of the first signal and the second signal from the dual-feed antenna.

In Example 16, the device of any one of Examples 2 to 15, wherein the third signal and the fourth signal are diplexed and fed into the dual-feed antenna without a switch to prevent concurrent transmission of the third signal and the fourth signal from the dual-feed antenna.

In Example 17, the device of any one of Examples 1 to 16, wherein the first signal and the third signal are signals on a first channel according to a multiple input multiple output (MIMO) protocol; wherein the second signal and the fourth signal are signals on a second channel according to a MIMO protocol; and wherein the first channel and the second channel are channels within a common band.

In Example 18, the device of any one of Examples 1 to 16, wherein the first signal and the second signal are signals on a first channel according to a multiple input multiple output (MIMO) protocol; wherein the third signal and the fourth signal are signals on a second channel according to a MIMO protocol; and wherein the first channel and the second channel are channels within a common band.

In Example 19, the device of any one of Examples 1 to 18, wherein the first signal is a signal according to an Institute of Electrical and Electronics Engineers (IEEE) 802.11 protocol on a first channel; wherein the second signal and the fourth signal are signals according to a multiple input multiple output (MIMO) protocol on a second channel, different from the first channel, and wherein the third signal is a signal according to a Bluetooth communication protocol.

In Example 20, the device of any one of Examples 1 to 19, wherein each of the first signal and the third signal are signals according to an Institute of Electrical and Electronics Engineers (IEEE) 802.11 protocol; wherein the first signal and the third signal are signals for a multiple input multiple output (MIMO) communication; wherein the first signal and the third signal share a common frequency; and wherein each of the second signal and the fourth signal are signals according to a Bluetooth communication protocol.

In Example 21, the device of any one of Examples 1 to 20, wherein each of the first signal and the second signal are signals for a single input single output communication, and wherein each of the third signal and the fourth signal are signals according to a Bluetooth communication protocol.

In Example 22, the device of Example 21, wherein the first signal is a signal on a first frequency in a 5 GHz frequency band or a 6 GHz frequency band; wherein the second signal is a signal on a second frequency, different from the first frequency, in a 5 GHz frequency band or a 6 GHz frequency band.

In Example 23, the device of Example 21 or 22, wherein the third signal is a first Bluetooth signal and wherein the fourth signal is a second Bluetooth signal.

In Example 24, the device of any one of Examples 1 to 23, wherein each of the first signal and the second signal are signals for a multiple input single output communication; wherein the first signal and the second signal are in a common channel; and wherein each of the third signal and the fourth signal are signals according to a Bluetooth communication protocol.

In Example 25, the device of Example 24, wherein the third signal is a first Bluetooth signal and wherein the fourth signal is a second Bluetooth signal.

In Example 26, a communication device, including the device of any one of Examples 1 to 25.

In Example 27, a device, including: a first diplexer, including: a first port for passing a first signal; a second port for passing a second signal; and a third port for passing a first combined signal including the first signal and the second signal; a second diplexer, including: a fourth port for passing a third signal; a fifth port, for passing a fourth signal; and a sixth port for passing a second combined signal including the third signal and the fourth signal; a dual-feed antenna, including a first antenna interface, connected to the third port; and a second antenna interface, connected to the sixth port; and wherein the dual-feed antenna is for concurrently transmitting or concurrently receiving the first combined signal and the second combined signal, and wherein one of the first signal or the second signal, and one of the third signal or the fourth signal are in a common frequency band.

In Example 28, the device of Example 27, wherein a frequency range of one of the first signal or the second signal overlaps with a frequency range of one of the third signal or the fourth signal.

In Example 29, the device of Example 27 or 28, wherein the dual-feed antenna includes a first feed for passing the first signal and the second signal; and a second feed for passing the third signal and the fourth signal; and wherein the antenna is for providing at least 20 dB of isolation between any of the first signal or the second signal, and any of the third signal or the fourth signal.

In Example 30, the device of any one of Examples 27 to 29, wherein the first diplexer is a low temperature co-fired ceramics (LTCC) diplexer.

In Example 31, the device of any one of Examples 27 to 30, wherein the second diplexer is a low temperature co-fired ceramics (LTCC) diplexer.

In Example 32, the device of any one of Examples 27 to 31, wherein neither the first diplexer nor the second diplexer is a bulk acoustic wave (BAW) diplexer.

In Example 33, the device of any one of Examples 27 to 32, wherein the first signal is a signal according to a Bluetooth communication protocol.

In Example 34, the device of Example 33, wherein the first signal is within a 2.4 GHz band.

In Example 35, the device of any one of Examples 27 to 34, wherein the second signal is a signal according to an Institute of Electrical and Electronics Engineers (IEEE) 802.11 protocol.

In Example 36, the device of Example 35, wherein the second signal is within a frequency range of 5 GHz to 7 GHz.

In Example 37, the device of any one of Examples 27 to 36, wherein the third signal is a signal according to an Institute of Electrical and Electronics Engineers (IEEE) 802.11 protocol.

In Example 38, the device of Example 37, wherein the third signal is within a 2.4 GHz band.

In Example 39, the device of any one of Examples 27 to 38, wherein the fourth signal is a signal according to an Institute of Electrical and Electronics Engineers (IEEE) 802.11 protocol.

In Example 40, the device of Example 39, wherein the fourth signal is within a frequency range of 5 GHz to 7 GHz.

In Example 41, the device of any one of Examples 28 to 40, wherein the first signal and the second signal are diplexed and fed into the dual-feed antenna without a switch to prevent concurrent transmission of the first signal and the second signal from the dual-feed antenna.

In Example 42, the device of any one of Examples 28 to 41, wherein the third signal and the fourth signal are diplexed and fed into the dual-feed antenna without a switch to prevent concurrent transmission of the third signal and the fourth signal from the dual-feed antenna.

In Example 43, the device of any one of Examples 27 to 42, wherein the first signal and the third signal are signals on a first channel according to a multiple input multiple output (MIMO) protocol; wherein the second signal and the fourth signal are signals on a second channel according to a MIMO protocol; and wherein the first channel and the second channel are channels within a common band.

In Example 44, the device of any one of Examples 27 to 42, wherein the first signal and the second signal are signals on a first channel according to a multiple input multiple output (MIMO) protocol; wherein the third signal and the fourth signal are signals on a second channel according to a MIMO protocol; and wherein the first channel and the second channel are channels within a common band.

In Example 45, the device of any one of Examples 27 to 44, wherein the first signal is a signal according to an Institute of Electrical and Electronics Engineers (IEEE) 802.11 protocol on a first channel; wherein the second signal and the fourth signal are signals according to a multiple input multiple output (MIMO) protocol on a second channel, different from the first channel, and wherein the third signal is a signal according to a Bluetooth communication protocol.

In Example 46, the device of any one of Examples 27 to 45, wherein each of the first signal and the third signal are signals according to an Institute of Electrical and Electronics Engineers (IEEE) 802.11 protocol; wherein the first signal and the third signal are signals for a multiple input multiple output (MIMO) communication; wherein the first signal and the third signal share a common frequency; and wherein each of the second signal and the fourth signal are signals according to a Bluetooth communication protocol.

In Example 47, the device of any one of Examples 27 to 46, wherein each of the first signal and the second signal are signals for a single input single output communication, and wherein each of the third signal and the fourth signal are signals according to a Bluetooth communication protocol.

In Example 48, the device of Example 47, wherein the first signal is a signal on a first frequency in a 5 GHz frequency band or a 6 GHz frequency band; wherein the second signal is a signal on a second frequency, different from the first frequency, in a 5 GHz frequency band or a 6 GHz frequency band.

In Example 49, the device of Example 47 or 48, wherein the third signal is a first Bluetooth signal and wherein the fourth signal is a second Bluetooth signal.

In Example 50, the device of any one of Examples 27 to 49, wherein each of the first signal and the second signal are signals for a multiple input single output communication; wherein the first signal and the second signal are in a common channel; and wherein each of the third signal and the fourth signal are signals according to a Bluetooth communication protocol.

In Example 51, the device of Example 50, wherein the third signal is a first Bluetooth signal and wherein the fourth signal is a second Bluetooth signal.

In Example 52, a communication device, including the device of any one of Examples 27 to 51.

In Example 53, a method, including: passing a first signal through a first port of a first diplexer; passing a second signal through a second port of the first diplexer; and passing a first combined signal including the first signal and the second signal through a third port of the first diplexer; passing a third signal through a fourth port of a second diplexer; passing a fourth signal through a fifth port of the second diplexer; and passing a second combined signal including the third signal and the fourth signal through a sixth port of the second diplexer; and concurrently transmitting or concurrently receiving the first combined signal and the second combined signal through a dual-feed antenna, wherein one of the first signal or the second signal, and one of the third signal or the fourth signal are in a common frequency band.

In Example 54, the method of Example 53, wherein a frequency range of one of the first signal or the second signal overlaps with a frequency range of one of the third signal or the fourth signal.

In Example 55, the method of Example 53 or 54, further including passing the first signal and the second signal through a first feed of the dual-feed antenna; passing the third signal and the fourth signal through a second feed of the dual-feed antenna; and providing at least 20 dB of isolation between any of the first signal or the second signal, and any of the third signal or the fourth signal.

In Example 56, the method of Example 55, further including providing at least 40 dB of isolation between any of the first signal or the second signal, and any of the third signal or the fourth signal.

In Example 57, the method of any one of Examples 53 to 56, wherein the first diplexer is a low temperature co-fired ceramics (LTCC) diplexer.

In Example 58, the method of any one of Examples 53 to 57, wherein the second diplexer is a low temperature co-fired ceramics (LTCC) diplexer.

In Example 59, the method of any one of Examples 53 to 58, wherein neither the first diplexer nor the second diplexer is a bulk acoustic wave (BAW) diplexer.

In Example 60, the method of any one of Examples 53 to 59, wherein the first signal is a signal according to a Bluetooth communication protocol.

In Example 61, the method of Example 60, wherein the first signal is within a 2.4 GHz band.

In Example 62, the method of any one of Examples 53 to 61, wherein the second signal is a signal according to an Institute of Electrical and Electronics Engineers (IEEE) 802.11 protocol.

In Example 63, the method of Example 62, wherein the second signal is within a frequency range of 5 GHz to 7 GHz.

In Example 64, the method of any one of Examples 53 to 63, wherein the third signal is a signal according to an Institute of Electrical and Electronics Engineers (IEEE) 802.11 protocol.

In Example 65, the method of Example 64, wherein the third signal is within a 2.4 GHz band.

In Example 66, the method of any one of Examples 53 to 65, wherein the fourth signal is a signal according to an Institute of Electrical and Electronics Engineers (IEEE) 802.11 protocol.

In Example 67, the method of Example 66, wherein the fourth signal is within a frequency range of 5 GHz to 7 GHz.

In Example 68, the method of any one of Examples 54 to 67, further including diplexing the first signal and the second signal and feed the diplexed first signal and second signal into the dual-feed antenna without a switch to prevent concurrent transmission of the first signal and the second signal from the dual-feed antenna.

In Example 69, the method of any one of Examples 54 to 68, further including diplexing the third signal and the fourth signal are feeding the diplexed third signal and fourth signal into the dual-feed antenna without a switch to prevent concurrent transmission of the third signal and the fourth signal from the dual-feed antenna.

In Example 70, the method of any one of Examples 53 to 69, wherein the first signal and the third signal are signals on a first channel according to a multiple input multiple output (MIMO) protocol; wherein the second signal and the fourth signal are signals on a second channel according to a MIMO protocol; and wherein the first channel and the second channel are channels within a common band.

In Example 71, the method of any one of Examples 53 to 69, wherein the first signal and the second signal are signals on a first channel according to a multiple input multiple output (MIMO) protocol; wherein the third signal and the fourth signal are signals on a second channel according to a MIMO protocol; and wherein the first channel and the second channel are channels within a common band.

In Example 72, the method of any one of Examples 53 to 71, wherein the first signal is a signal according to an Institute of Electrical and Electronics Engineers (IEEE) 802.11 protocol on a first channel; wherein the second signal and the fourth signal are signals according to a multiple input multiple output (MIMO) protocol on a second channel, different from the first channel, and wherein the third signal is a signal according to a Bluetooth communication protocol.

In Example 73, the method of any one of Examples 53 to 72, wherein each of the first signal and the third signal are signals according to an Institute of Electrical and Electronics Engineers (IEEE) 802.11 protocol; wherein the first signal and the third signal are signals for a multiple input multiple output (MIMO) communication; wherein the first signal and the third signal share a common frequency; and wherein each of the second signal and the fourth signal are signals according to a Bluetooth communication protocol.

In Example 74, the method of any one of Examples 53 to 73, wherein each of the first signal and the second signal are signals for a single input single output communication, and wherein each of the third signal and the fourth signal are signals according to a Bluetooth communication protocol.

In Example 75, the method of Example 74, wherein the first signal is a signal on a first frequency in a 5 GHz frequency band or a 6 GHz frequency band; wherein the second signal is a signal on a second frequency, different from the first frequency, in a 5 GHz frequency band or a 6 GHz frequency band.

In Example 76, the method of Example 74 or 75, wherein the third signal is a first Bluetooth signal and wherein the fourth signal is a second Bluetooth signal.

In Example 77, the method of any one of Examples 53 to 76, wherein each of the first signal and the second signal are signals for a multiple input single output communication; wherein the first signal and the second signal are in a common channel; and wherein each of the third signal and the fourth signal are signals according to a Bluetooth communication protocol.

In Example 78, the method of Example 77, wherein the third signal is a first Bluetooth signal and wherein the fourth signal is a second Bluetooth signal.

While the above descriptions and connected figures may depict components as separate elements, skilled persons will appreciate the various possibilities to combine or integrate discrete elements into a single element. Such may include combining two or more circuits for form a single circuit, mounting two or more circuits onto a common chip or chassis to form an integrated element, executing discrete software components on a common processor core, etc. Conversely, skilled persons will recognize the possibility to separate a single element into two or more discrete elements, such as splitting a single circuit into two or more separate circuits, separating a chip or chassis into discrete elements originally provided thereon, separating a software component into two or more sections and executing each on a separate processor core, etc.

It is appreciated that implementations of methods detailed herein are demonstrative in nature, and are thus understood as capable of being implemented in a corresponding device. Likewise, it is appreciated that implementations of devices detailed herein are understood as capable of being implemented as a corresponding method. It is thus understood that a device corresponding to a method detailed herein may include one or more components configured to perform each aspect of the related method.

All acronyms defined in the above description additionally hold in all claims included herein.

## Claims

1. An apparatus, comprising:
a first diplexer, comprising:
a first port, configured to pass a first signal;
a second port, configured to pass a second signal; and
a third port, configured to pass a first combined signal comprising the first signal and
the second signal;
a second diplexer, comprising:
a fourth port, configured to pass a third signal;
a fifth port, configured to pass a fourth signal; and
a sixth port, configured to pass a second combined signal comprising the third signal
and the fourth signal; and
a dual-feed antenna, comprising a first antenna interface, connected to the third port; and a second antenna interface, connected to the sixth port,
wherein the dual-feed antenna is configured to concurrently transmit or concurrently receive the first combined signal and the second combined signal, and wherein one of the first signal or the second signal, and one of the third signal or the fourth signal are in a common frequency band.

2. The apparatus of claim 1,
wherein a frequency range of one of the first signal or the second signal overlaps with a frequency range of one of the third signal or the fourth signal.

3. The apparatus of any one of claims 1 or 2,
wherein the dual-feed antenna comprises a first feed, configured to pass the first signal and the second signal; and a second feed, configured to pass the third signal and the fourth signal; and wherein the dual-feed antenna is configured to provide at least 20 dB of isolation between any of the first signal or the second signal, and any of the third signal or the fourth signal.

4. The apparatus of any one of claims 1 to 3,
wherein the first diplexer is a low temperature co-fired ceramics (LTCC) diplexer and wherein the second diplexer is a low temperature co-fired ceramics (LTCC) diplexer.

5. The apparatus of any one of claims 2 to 4,
wherein the third signal and the fourth signal are diplexed and fed into the dual-feed antenna without a switch to prevent concurrent transmission of the third signal and the fourth signal from the dual-feed antenna.

6. The apparatus of any one of claims 1 to 5,
wherein the first signal and the third signal are signals on a first channel according to a multiple input multiple output (MIMO) protocol; wherein the second signal and the fourth signal are signals on a second channel according to a MIMO protocol; and wherein the first channel and the second channel are channels within a common band;
preferably wherein the first signal and the third signal have a common channel in one of a 5 GHz band or a 6 GHz band, and wherein the second signal and the fourth signal have a common channel in another of the 5 GHz band or the 6 GHz band.

7. The apparatus of any one of claims 1 to 6,
wherein the first signal and the second signal are signals on a first channel according to a multiple input multiple output (MIMO) protocol; wherein the third signal and the fourth signal are signals on a second channel according to a MIMO protocol; and wherein the first channel and the second channel are channels within a common band.

8. The apparatus of claim 6,
wherein the first signal and the second signal have a common channel in one of a 5 GHz band or a 6 GHz band, and wherein the third signal and the fourth signal have a common channel in another of the 5 GHz band or the 6 GHz band.

9. The apparatus of any one of claims 1 to 8,
wherein the first signal is a signal according to an Institute of Electrical and Electronics Engineers (IEEE) 802.11 protocol on a first channel; wherein the second signal and the fourth signal are signals according to a multiple input multiple output (MIMO) protocol on a second channel, different from the first channel; and
wherein the third signal is a signal according to a Bluetooth communication protocol.

10. The apparatus of any one of claims 1 to 9,
wherein each of the first signal and the third signal are signals according to an Institute of Electrical and Electronics Engineers (IEEE) 802.11 protocol; wherein the first signal and the third signal are signals for a multiple input multiple output (MIMO) communication; wherein the first signal and the third signal share a common frequency; and wherein each of the second signal and the fourth signal are signals according to a Bluetooth communication protocol;
preferably wherein the first signal and the third signal are signals in either a 5 GHz band or a 6 GHz band, and wherein the second signal and the fourth signal are signals within a 2.4 GHz band.

11. The apparatus of any one of claims 1 to 10,
wherein each of the first signal and the second signal are signals for a single input single output communication, and wherein each of the third signal and the fourth signal are signals according to a Bluetooth communication protocol;
preferably wherein the first signal is a signal on a first frequency in a 5 GHz frequency band or a 6 GHz frequency band, wherein the second signal is a signal on a second frequency, different from the first frequency, in a 5 GHz frequency band or a 6 GHz frequency band; or preferably wherein the third signal is a first Bluetooth signal and wherein the fourth signal is a second Bluetooth signal.

12. The apparatus of any one of claims 1 to 11,
wherein each of the first signal and the second signal are signals for a multiple input single output communication; wherein the first signal and the second signal are in a common channel; and wherein each of the third signal and the fourth signal are signals according to a Bluetooth communication protocol;
preferably wherein the third signal is a first Bluetooth signal and wherein the fourth signal is a second Bluetooth signal.

13. The apparatus of any one of claims 1 to 12,
wherein the apparatus is provided in at least one of an integrated circuit, a System on Chip, a System in Package or a computing device.

14. A method comprising:
passing a first signal through a first port of a first diplexer;
passing a second signal through a second port of the first diplexer;
passing a first combined signal including the first signal and the second signal through a third port of the first diplexer;
passing a third signal through a fourth port of a second diplexer;
passing a fourth signal through a fifth port of the second diplexer;
passing a second combined signal including the third signal and the fourth signal through a sixth port of the second diplexer; and
concurrently transmitting or concurrently receiving the first combined signal and the second combined signal through a dual-feed antenna, wherein one of the first signal or the second signal, and one of the third signal or the fourth signal are in a common frequency band.

15. A non-transitory computer readable medium, comprising instructions which, if executed by one or more processors, cause the one or more processors to:
pass a first signal through a first port of a first diplexer;
pass a second signal through a second port of the first diplexer;
pass a first combined signal including the first signal and the second signal through a third port of the first diplexer;
pass a third signal through a fourth port of a second diplexer;
pass a fourth signal through a fifth port of the second diplexer;
pass a second combined signal including the third signal and the fourth signal through a sixth port of the second diplexer; and
concurrently transmit or concurrently receive the first combined signal and the second combined signal through a dual-feed antenna, wherein one of the first signal or the second signal, and one of the third signal or the fourth signal are in a common frequency band.
